# EUROPEAN PATENT APPLICATION

(11) **EP 1 363 373 A2**
(43) Date of publication of application: **19.11.2003**
(21) Application number: 03388036.0
(22) Date of filing: 14.05.2003
(51) Int. Cl.: H02G 1/08

(54) **A device for drawing and replacing cables and a method of drawing and replacing cables by means of the device**

(30) Priority: 14.05.2002 DK 200200745
(71) Applicant: Nordstrand, Torsten, 3400 Hillerod (DK)
(72) Inventor: Nordstrand, Torsten, 3400 Hillerod (DK)
(74) Representative: Stellinger, Jens-Holger

(57) **Abstract**

Many cable drawing tasks are performed in cable networks in communications or supply networks, and it is frequently necessary to replace or remove cables. Many such cables are provided with connectors extending more widely transversely of the cable than the cable per se. As a result, cables often become wedged in line bunches or even become stuck in transverse structures. According to the invention these drawbacks have been remedied by means of a device and a method for drawing and replacing cables, wherein the device (1) is shaped as a substantially cylindrical hollow body (2), which in the draw direction tapers as a truncated cone (5) below an angle (α) such that in its lateral wall the device is provided with a slot (3) being parallel to the axis and extending in the entire length of the hollow body (1) and having a width (b) corresponding substantially to a cable to be drawn, and that the internal diameter (4) of the majority of the hollow body (1) exceeds the slot (3) and substantially may enclose a connector mounted on a cable, the diameter (d) in the outermost tapered end of the hollow body (1) being reduced to the width (b) of the slot (3).

The method of replacing cables by means of the device (1) includes the following steps. A cable to be replaced is connected for drawing with a replacement cable using means of suitable means (4). The replacement cable is inserted into a first device (1) through the slot (3) thereof. The replacement cable is inserted into a second device (I) through the slot (3) thereof, whereafter the cable to be replaced is pull through along with the replacement cable.

## Description

The invention relates to a device for drawing and replacing cables, preferably communication and power cables or supply lines, through narrow, long passageways, said device being shaped as a substantially cylindrical hollow body tapering as a truncated cone below a certain angle. The invention further relates to a method of drawing and replacing cables or lines by means of the device.

WO 97/42531 A1 discloses a system for the drawing of cables. The system includes two bodies, particularly a protective coat for mounting on a cable with a connector and further a pulling body, which is tapered in the pulling direction. The coat is also egg-shaped and tapers in the direction opposite the pulling direction. The coat is relatively expensive to produce, as an assembly mechanism for the coat comprises a threaded cover in the pulling direction.

WO 98/20602 discloses a cable forerunner for winding high-voltage cables in an electric motor, wherein one end of the cable forerunner is attached to the end of the cable, the cable forerunner being arranged to draw the cable through a first slot in the motor stator and to control the curvature of the cable from its exit from the slot to its entry into a second slot in the motor stator. The disclosed cable forerunner is adapted for the re-winding of high-voltage cables, which typically have a diameter between 20 and 350 mm, in the stator slots of a motor.

EP 427 354 B2 discloses an apparatus for introducing (installing) cables, such as for instance optical glass fibre cables, into a channelization system of guide tubes, commonly denoted as ducts, which are usually placed in the ground. A multitude of ducts, pneumatic, pneumatic motors, etc. are used to this end. The apparatus disclosed can only be used for applications, wherein guide tubes are already provided and not for instance for replacing a cable in a cable bundle.

It has hitherto proved difficult to draw and replace cables in a cable bunch or lines which often extend in a multitude through several rooms and floors. In addition hereto, when the connectors, which often extend more widely transversely of the cables than the cables per se, it may be necessary to remove the connectors before extracting a cable. As a result heavy costs are involved in the drawing of a new cable in that some connectors, eg. for optical fibre cables made by 3M under the brand VF45, are extremely expensive to buy and install. These and other connectors, eg the widely used AMP connectors RJ45 for internet communications, are provided with a locking device acting a as barb when the cable is extracted, whereby the cable become stuck in any transverse structure. In this case the removal of the connector would be suitable. However, this may make the installation of a new cable more difficult.

The present invention is based on the realization that the replacement of a cable may be facilitated, if the cable to be replaced is able to draw the replacement cable, a line or a draw string, along through its former position. It is the object of the present invention to provide a device, which is able to reduce the risk of a cable or its connector being stuck in a transverse structure.

According to the invention in its lateral wall the device is provided with a slot being parallel to the axis and extending in the entire length of the hollow body, the width of the hollow body being substantially less than that of the cable or line to be drawn, and that the internal diameter of the majority of the hollow body exceeds the slot and may substantially enclose a line or a connector mounted on a cable, the diameter in the outermost tapered end of the hollow body being reduced to the width of the slot.

By means of a device according to the invention a cable may be extracted from a cable bunch without the connector being removed, said connector being embedded in the device during the entire extraction process. The cable to be replaced may furthermore be connected to the replacement cable, which further may be provided with a device according to the invention, whereby the drawing of the new cable is effected in the same movement as the extraction of the cable to be replaced. Moreover, by means of a device according to the invention a pre-arranged draw string may draw a power cable or a supply line, the supply line being arranged inside the cylindrical hollow body.

In an advantageous embodiment of the invention the reduction of the internal diameter of the tip of the hollow body is gradual. This feature enables the device to be retained by the connector on the cable without the connector becoming wedged in the device. As a result the extraction of the cable with the connector from the device is facilitated after completion of the pull-through.

It has proved advantageous to use an angle α in the open interval between 0° and 45° and more advantageous to use an angle α in the open interval between 15° and 25° and most advantageous to use an angle in the open interval between 18° and 22°. When forming the device according to the invention, the angle has to be less than 45°, as the pull-through otherwise would be rendered more difficult. On the other hand, the angle must not be too small, as this extends the device, which in turn renders the passage of the device through narrow curves of cable bunches more difficult.

With a view to reducing the motion resistance of the device the transition between the truncated cone and the cylindrical hollow body may be rounded, eg as a bottle shoulder.

For a further reduction of the friction during the replacement process, the device may be made from a material with a low specific coefficient of friction. Particularly advantageous is the use of a material from the group of chemical compounds represented by for instance polytetrafluoroethylene PTFE or similar plastics having a low specific coefficient of friction, such as for instance polyoxy methylene, POM.

For an advantageous use of the device according to the invention there is suggested a method of replacing cables by means of the device according to the invention, a cable to be replaced being connected for drawing to a replacement cable using suitable means, the replacement cable being inserted into a first device through the slot therein, the first device then being drawn along the cable to the end of the cable while enclosing the connector, the replacement cable being inserted into a second device through the slot, the device then being drawn along the replacement cable to the end of the cable while enclosing the connector, whereafter the cable to be replaced may be pulled through along with replacement cable. The second device is retained by means of the locking arm of the connector, said locking arm being forced against the inner face of the second device by means of the draw connection's draw. The suggested method may also be used for the replacement of a draw string or merely for the removal of the cable, the device being used only for the removal of the specific cable. On the other hand a method may also be carried out by means of the device according to the invention, when an existing draw string is to draw a supply line through narrow passages. In this case, the draw string in the line, which may be a high-voltage cable or a hydraulic or water line, is secured by means of a single guide in the high-voltage cable or secured in a bore, which may extend transversely of the line aperture.

When carrying out the method according to the invention it is preferred that the joining means between the cable to be replaced and the replacement cable is formed of closed loop, preferably an O-ring or a ½" gasket. It is, however, obvious that any closed loop of a suitable size may be used as draw connection between the two cables, the distance between the cable terminals, however, not being too great, as the replacement cable otherwise would present to much resistance and possibly become stuck in transverse structures or narrow curves.

The invention is explained below by means of an embodiment shown in the drawings in which
- Figure 1: is a perspective view of the device according to the invention when seen from the frustum end of the hollow body,
- Figure 2: is a perspective view of the device according to the invention, the cable being provided in the slot,
- Figure 3: is a perspective view of the device according to the invention, in which the connector has been inserted into the hollow body,
- Figure 4: is a view of two devices according to the invention during preparation of the method according to the invention,
- Figure 5: illustrates an example of a closed loop, which can be used as a joining means,
- Figure 6: is a view of two devices according to the method enclosing the connectors,
- Figure 7: is a view of a device according to the invention, the slot being visible and the angle being indicated,
- Figure 8: illustrates an example of a cross section of the device according to the invention, and
- Figure 9: illustrates an embodiment in which the device is used on a high-voltage cable or a supply line with a draw string.

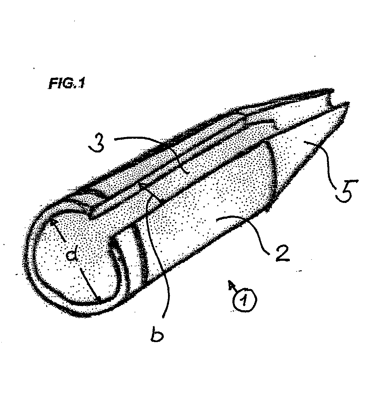

Figure 1 shows the device 1 with the cylindrical hollow body 2, which in the draw direction tapers into a truncated cone 5 below an angle (α) and in its lateral wall is provided with a slot 3 being parallel to the axis and extending in the entire length of the hollow body 1, the width b of the hollow body corresponding to that of a cable to be drawn. The figure thus shows the internal diameter d of the cylindrical portion 2 of the hollow body 1, said diameter exceeding the slot 3 and being able to substantially enclose a connector mounted on the cable. In the outermost tapered end of the hollow body, the diameter is reduced to the width b of the slot 3. The figure thus shows a gradual reduction of the diameter d.

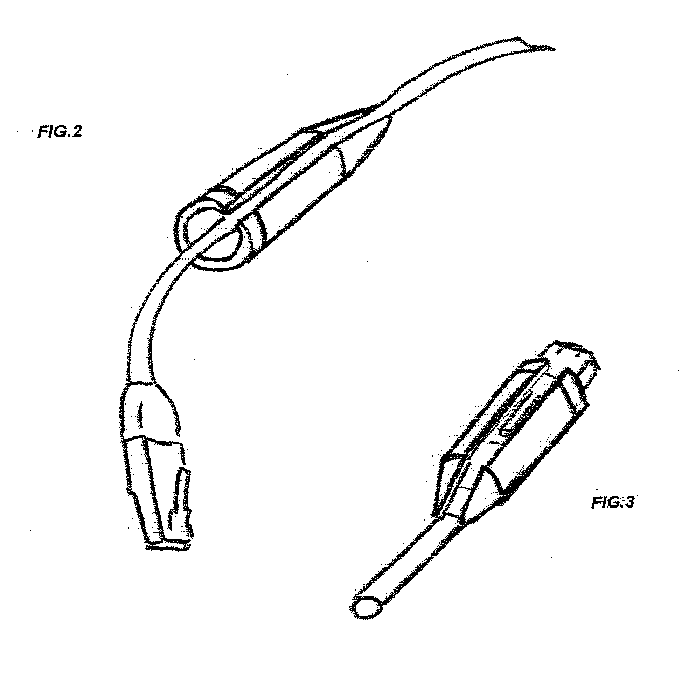

Figure 2 shows the device 1 with the cable arranged in the slot 3. In the shown example, the connector is an AMP RJ45 used in a telecommunications network. The connector may also be an optical fibre connector of the type VF45 made by 3M. This connector is characterised by being provided with a small locking arm, which secures the connector in the associated port and like a barb projects from the connector body per se. Figure 3 shows the completely mounted device, the locking arm on the connector, however, being arranged in the slot 3. In order to eliminate the locking arm completely the connector may rotate about its longitudinal axis such that the locking arm is provided under the device's 1 encasing in the cylindrical portion 2 of the hollow body 1.

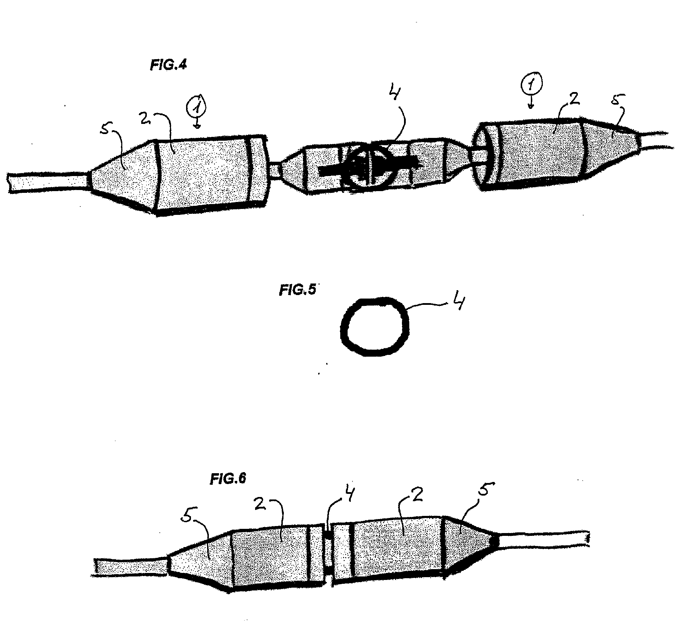

Figure 4 shows a joining of two cables, the device 1, however, not being pushed into its final position over the connectors, which also in this example are AMP RJ45 connectors. A loop is shown, in this example the loop is secured to the locking arms of the two connectors, said procedure being completely secure, as the locking arm are prevented from swinging to the side and thus break, when the device 1 has been correctly arranged. Figure 5 shows an example of a loop 4 which may be made from any suitable material. However, it is considered advantageous to use an O-ring, which is available in several sizes or a ½" gasket, which are often very easy to provide. Figure 6 shows a completed joining of the two cables, the device 1 being pushed into position over the connectors. As evident, due to the small gap between the connector ends, the assembly is flexible and may easily be passed through comparatively narrow curves.

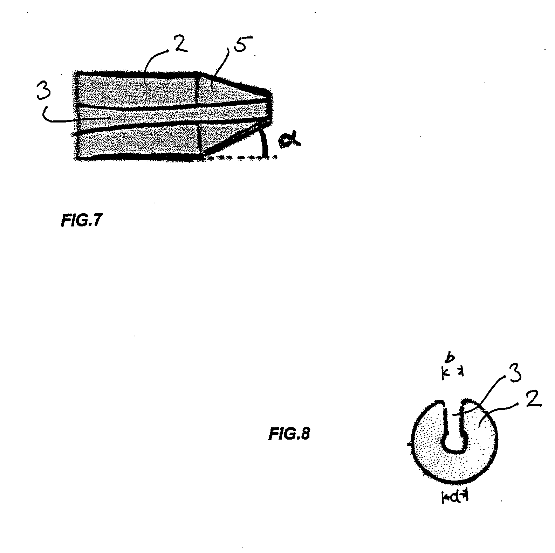

Figure 7 shows another embodiment of the slot 3, in which the width b of the slot 3 moderately increases opposite the draw direction. The angle α defined by the angle of the truncated cone from the cone axis is furthermore illustrated. Figure 8 shows an example of a cross section through the device 1. It is shown that the internal diameter exceeds the width b of the slot 3.

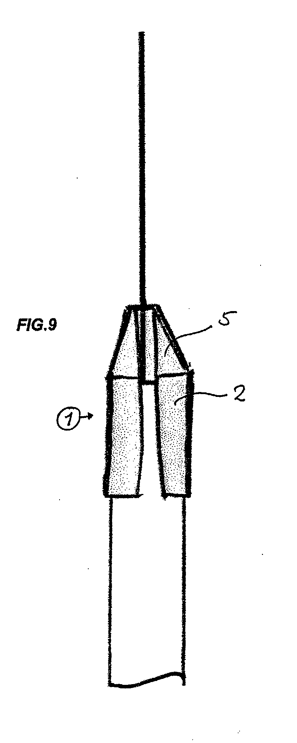

Figure 9 shows the device according to the invention used on a high-voltage cable or a supply line, which may be a so-called PEX tube for water or hydraulic installations. In this embodiment the cable or line is of a calibre, which completely fills the interior of the cylindrical portion 2 of the hollow body 1, wherein a draw string is secured to the cable or line. Such cables or lines are not provided with connectors, for which reason said cables or lines may be effortlessly extracted from a cable or lines bunch, optionally along with a new draw string. A fast and uncomplicated replacement of cables or lines is thus obtained.

Consequently the device according to the invention offers a fast and thus cost-effective replacement of cables and lines of any type forming part of a cable or line bunch.

## Claims

1. Device for drawing and replacing cables, preferably communication and supply cables, the device being shaped as a substantially cylindrical hollow body (2), which in the draw direction tapers as a truncated cone (5) below an angle (α), **characterised in that** in its lateral wall the device is provided with a slot (3) being parallel to the axis and extending in the entire length of the hollow body (1) and having a width (b) corresponding substantially to that of a cable to be drawn and that the internal diameter (d) of the majority of the hollow body (1) exceeds the slot (3) and may substantially enclose a connector mounted on a cable, the diameter (d) in the outermost tapered end of the hollow body being reduced to the width of the slot.

2. Device according to claim 1, **characterised in that** the diameter (d) is gradually reduced.

3. Device according to claim 1 or 2, **characterised in that** the angle (α) is in the open interval between 0° and 45°.

4. Device according to any of the preceding claims, **characterised in that** the angle (α) is in the open interval between 15° and 25°.

5. Device according to any of the preceding claims, **characterised in that** the angle (α) is in the open interval between 18° and 22°.

6. Device according to any of the preceding claims, **characterised in that** the transition between the truncated cone (5) and the cylindrical hollow body is rounded.

7. Device according to any of the preceding claims, **characterised in that** it is made from a material with a low specific coefficient of friction.

8. Device according to claim 7, **characterised in that** the material is found among the group of chemical compounds represented by for instance polytetrafluoroethylene PTFE or similar plastics having a low specific coefficient of friction, as such for instance polyoxy methylene, POM.

9. Method for the replacement of cables by means of the device according to any of the preceding claim, **characterised in that**
(1) a cable to be replaced is connected for drawing to a replacement cable using suitable means (4),
(2) the replacement cable is inserted into a first device (1) through the slot (3) thereof,
(a) the first device (1) is then drawn along the cable to be replaced to the end of the cable while enclosing the connector,
(3) the replacement cable is inserted into a second device (1) through the slot (3) thereof,
(a) this device (1) is then drawn along the replacement cable to the end of the cable while enclosing the connector,
(4) whereafter the cable to be replaced is pulled through along with the replacement cable.

10. Method according to claim 9, **characterised in that** the joining means (4) between the cable to be replaced and the replacement cable is formed of a closed loop (4).
